(19) **Europäisches Patentamt** / **European Patent Office** / **Office européen des brevets**

(11) **EP 4 222 549 B1**

(12) # EUROPEAN PATENT SPECIFICATION

(45) Date of publication and mention of the grant of the patent:
**25.02.2026 Bulletin 2026/09**

(21) Application number: **21782960.5**

(22) Date of filing: **23.09.2021**

(51) International Patent Classification (IPC):
**G02B 27/01** *(2006.01)*  **H05B 45/00** *(2022.01)*

(52) Cooperative Patent Classification (CPC):
**H05B 47/25; H05B 45/10; H05B 45/50;**
G02B 27/01; G02B 2027/0118

(86) International application number:
**PCT/EP2021/076174**

(87) International publication number:
**WO 2022/069337 (07.04.2022 Gazette 2022/14)**

(54) **HEAD-UP DISPLAY UNIT WITH BLINDING PREVENTION**

HEAD-UP-ANZEIGEEINHEIT MIT VERBLINDUNGSVERHINDERUNG

UNITÉ D'AFFICHAGE TÊTE HAUTE AVEC PRÉVENTION DE MASQUAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2020 EP 20465565**
**02.10.2020 DE 102020212478**

(43) Date of publication of application:
**09.08.2023 Bulletin 2023/32**

(73) Proprietor: **AUMOVIO Germany GmbH**
**60488 Frankfurt am Main (DE)**

(72) Inventor: **ALEXE, Tudor-Stefan**
**60488 Frankfurt am Main (DE)**

(74) Representative: **Aumovio Corporation**
**AUMOVIO Germany GmbH**
**Taunusstraße 36**
**80807 München (DE)**

(56) References cited:
**US-A1- 2008 284 346    US-A1- 2015 015 155**
**US-A1- 2016 363 764**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention is related to a head-up display unit being provided with blinding prevention capabilities, especially for use in a vehicle like a car or another road vehicle.

Head-up displays generally consist of a picture generating unit (PGU), an optical unit and a mirror unit. The picture generating unit generates the image to be displayed. The optical unit directs the image to the mirror unit. The mirror unit is a partially reflecting, translucent pane, which reflects the light in such way that it reaches the so-called eyebox. The eyebox is an area whose height and width correspond to a theoretical viewing window. As long as an eye of the viewer is inside the eyebox, all elements of the virtual image are visible to the eye. If, on the other hand, the eye is outside the eyebox, the virtual image is only partially or not at all visible to the viewer. The larger the eyebox is, the less restricted the viewer is in his choice of sitting position.

The viewer sees the content displayed by the picture generating unit as a virtual image and, at the same time, the real world behind the translucent pane. In the automotive sector, the windscreen often serves as a mirror unit, the curved shape of which must be taken into account in the representation. However, the mirror unit may also be a dedicated screen, called combiner. Through the interaction of the optical unit and the mirror unit, the virtual image is an enlarged representation of the image generated by the picture generating unit.

The picture generating unit and the optical unit of a head-up display are typically arranged in a common housing assembly, which may also include electronic components necessary for operation of the head-up display. The housing assembly is sealed with a cover glass and protects the various components from damage as well as dust or other environmental influences. Furthermore, the housing assembly helps to simplify mounting of the head-up display in a vehicle, as all necessary components can be installed in a single production step.

Powerful light sources are used in modern head-up displays. In case of a malfunction the light sources might emit light that is very bright and might blind the user of the head-up display. This is especially critical if the user is a driver of a vehicle. Blinding of a driver should be prevented for safety reasons.

It is known to measure the electric current that flows through the light sources, and to cut it off or reduce it in case a certain threshold is exceeded. Measuring this electric current requires additional elements that are costly and/or costly to implement.

US 2020/0251894 A1 shows a known overcurrent protection circuit. US 2016/363764 A1 describes a head-up display for a vehicle using a backlight unit.

It is desired to find an appropriate and cost-efficient solution for head-up display unit blinding prevention.

This is achieved by a head-up display unit according to claim 1. Such head-up display unit comprises a mirror, a picture generating unit for creating an image to be displayed as a virtual image to a viewer, a backlight unit with a backlight driver for the picture generating unit, and a control unit for the backlight unit. The control unit is advantageously provided to receive an input voltage signal of the backlight driver, an input current signal of the backlight driver, and an output voltage signal of the backlight driver, and to output an overcurrent signal. This has the advantage that a backlight driver may be used, that does not conform to ASIL (Automotive Safety Integrity Level - a risk classification scheme). Thus, the backlight driver may be a part that fulfils lower quality requirements than a part that forms to ASIL. Such part is cheaper than a component that fulfils ASIL requirements. Due to the measures according to the invention use of such non-ASIL backlight driver still provides reliable overcurrent detection and thus reliable driver blinding prevention. Further, there is no need for complex or costly components to measure the electric current through backlight unit. Further, there is no elder duration of the backlight driver output circuitry which would be necessary if the current through the backlight unit was to be measured directly.

According to the claimed invention, the head-up display unit further comprises a high side switch with integrated current mirror providing a mirror voltage signal to the control unit. The advantage that the current mirror voltage signal, that is anyway available, is used to derive the input current signal, thus avoiding directly measuring the electric current that flows through the backlight unit, which would come with the disadvantages mentioned above.

Preferably, a head-up display unit according to the invention has a backlight unit that further comprises a local dimming driver providing local dimming signals to light sources of the backlight unit and to the control unit. This has the advantage that the control unit is enabled to determine a local overcurrent that may lead to driver blinding in case some of the light sources are deemed, and thus the overall output current does not reach an overcurrent threshold value.

Further features of the present invention will become apparent from the following description and the appended claims in conjunction with the figures.

Figures

Fig. 1    state-of-the-art head-up display unit;
Fig. 2    simplified sketch similar to Fig.1;
Fig. 3    picture generating unit;
Fig. 4    backlight driver;
Fig. 5    circuitry of a head-up display unit according to the invention;
Fig. 6    circuitry of another head-up display unit according to the invention.

Detailed description

For a better understanding of the principles of the present invention, embodiments of the invention will be explained in more detail below with reference to the figures.

Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

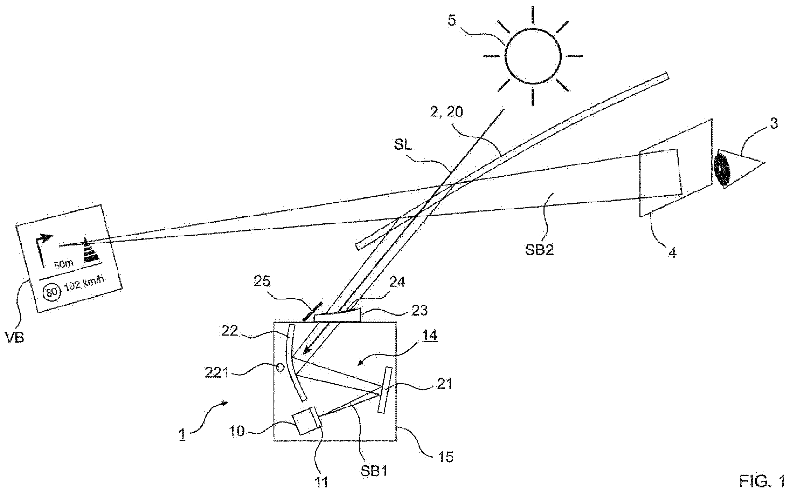

Fig. 1 shows a sketch of a state-of-the-art head-up display unit 1 for a motor vehicle. The head-up display unit 1 has a picture generating unit 10, an optical unit 14 and a mirror unit 2. A beam SB1 emanates from a liquid crystal display 11 of the picture generating unit 10 and is reflected by a folding mirror 21 onto a curved mirror 22, which reflects it in the direction of the mirror unit 2. The mirror unit 2 is shown here as a windscreen 20 of the motor vehicle. From there, the beam SB2 is directed towards the eye 3 of an observer.

The observer sees a virtual image VB, which is located outside the vehicle above the bonnet or even in front of the vehicle. Due to the interaction of the optical unit 14 and the mirror unit 2, the virtual image VB is an enlarged representation of the image displayed by the display 11. Here a symbolic speed limit, the current vehicle speed and navigation instructions are displayed. As long as the eye 3 is inside the eyebox 4 indicated by a rectangle, all elements of the virtual image VB are visible to the eye 3. If the eye 3 is located outside the eyebox 4, the virtual image VB is only partially or not at all visible to the viewer. The larger the eyebox 4 is, the less restricted the viewer is in his choice of the seating position.

The curvature of the curved mirror 22 is adapted to the curvature of the windscreen 20 and ensures that the image distortion is stable over the entire eyebox 4. The curved mirror 22 is rotatably supported by a bearing 221. By rotating the curved mirror 22, it is possible to shift the eyebox 4 and thus to adjust the position of the eyebox 4 to the position of the eye 3. The folding mirror 21 ensures that the distance travelled by the beam SB1 between the display 11 and the curved mirror 22 is long, while, at the same time, the optical unit 14 remains compact. The optical unit 14 and the picture generating unit 10 are accommodated in a housing assembly 15 and separated from the environment by a transparent cover 23. The optical elements of the optical unit 14 are thus protected, for example, against dust inside the vehicle. An optical foil or polarizer 24 can be located on the cover 23. The display 11 is typically polarized and the mirror unit 2 acts like an analyser. The purpose of the polarizer, or glare trap, 24 is to influence the amount of sunlight entering the head-up display. A light trap 25 serves to securely shield light reflected from the road or to block light from different sources placed at car height level so that it does not reach the observer. In addition to sunlight SL coming from the sun 5, also light from another source of interference might reach the display 11.

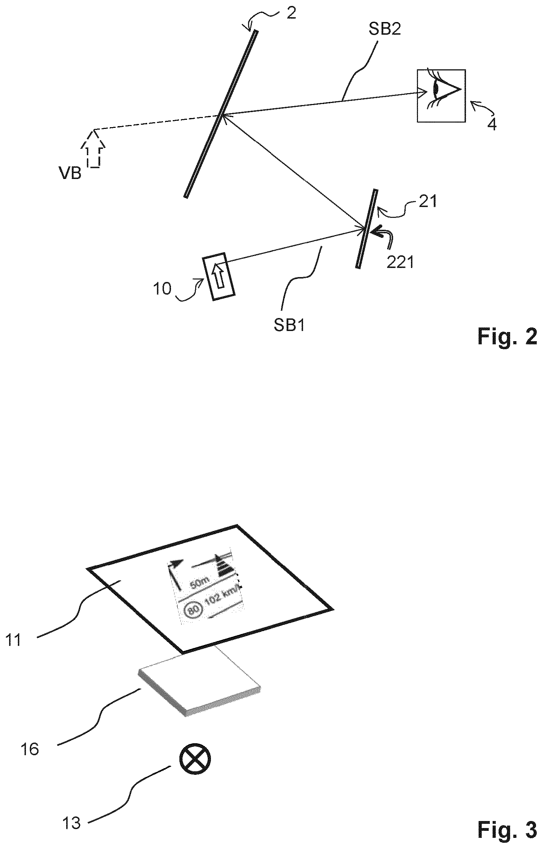

Fig. 2 shows a simplified sketch similar to Fig.1. Here, only a single mirror, folding mirror 21, is shown for simplicity. A Head-up Display, also referred to as HUD, is used to place information in the field of view of the user in such a way as to appear integrated in the surrounding environment. The intention is to provide the information in a way that does not require the user to significantly change the eye gaze direction and/or focus distance. HUDs are of particular importance in avionics and the automotive fields where they allow the vehicle's operator to glance important aspects of the trip without taking the eyes away from the path ahead. For this purpose, state of the art HUDs are required to deliver this information clearly discernible, independent of the ambient light level. This translates in high brightness requirements in excess of 10,000 cd/m$^2$ or even 15,000 cd/m$^2$ for the virtual image produced by the HUD. One of the preferred architectures for HUDs, as depicted in the figure, comprises an image generating unit 10, an intermediate mirror, the folding mirror 21, and a transparent HUD screen, the mirror unit 2. As a note, this diagram should be understood as one of the possible embodiments and should not be regarded as restrictive to the present invention.

The picture generating unit 10 is responsible for producing the symbols that shall be visible to the end user. The optical system from the depicted embodiment, consisting of the folding mirror 21 and the HUD screen, mirror unit 2, is designed in such a way as to produce a virtual image VB from the images generated by the generator unit 10 that are magnified and seen at a certain distance in front of the mirror unit 2. As a note, the mirror unit 2 is formed with the aid of an optically clear medium in order to not impede the visibility of the end user's environment. This mirror unit 2 may be a dedicated component, typically called combiner, or it may be formed as a region on the vehicle's windshield.

Fig. 3 shows the picture generating unit 10 in a simplified diagrammatic view. A light source 13 illuminates, via a light control structure 16, a liquid crystal display 11 on which an image is displayed that corresponds to the virtual image VB to be shown to the user. Given the topology of the optical system used to create the virtual image VB based on the images produced by the generator unit 10, the brightness of the symbols displayed by the image generating unit should be around five times larger than the required virtual image brightness. A transmissive liquid crystal display 11, also referred to as LCD, is shown here. However, also other display technologies known to the skilled person, transmissive displays as well as reflective displays or self-emitting displays may be applied here as well.

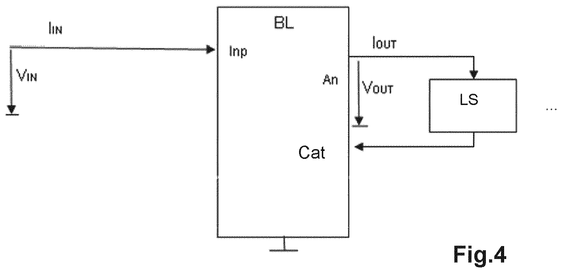

Fig. 4 shows a known head-up display unit 1 with backlight driver BL. The backlight driver BL is connected to an input voltage $V_{IN}$ of the power supply. Input current $I_{IN}$ flows to input In of the backlight driver BL. At an anode An of the backlight driver BL output voltage $V_{OUT}$ to drive a light source LS is provided. Output current $I_{OUT}$ flows through the light source LS and back to cathode input Cat of the backlight driver BL. In order to prevent an overcurrent through the light source LS either the input current $I_{IN}$ or the output current $I_{OUT}$ is to be measured. These measurements, in order to be sufficiently precise, require special components and are thus costly.

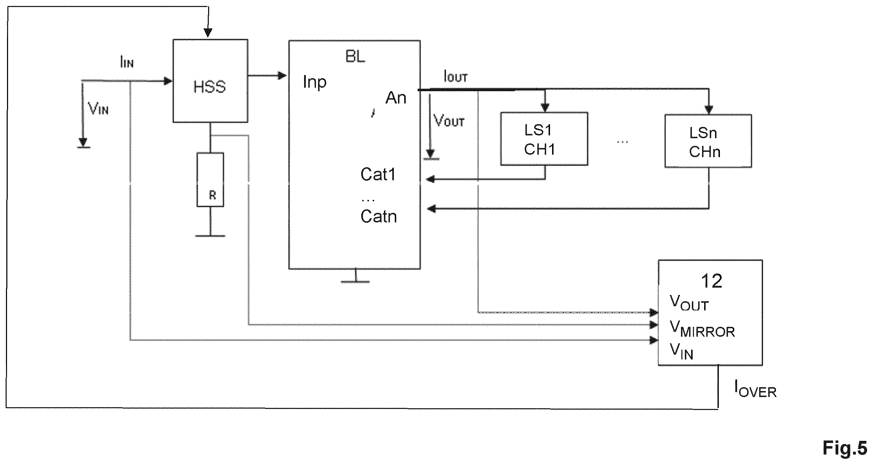

Fig. 5 shows circuitry of a head-up display unit 1 according to the invention. It is provided with high side switch HSS to connect the input connector Inp of the backlight driver BL to the input voltage $V_{IN}$. The input voltage $V_{IN}$ is also supplied to a respective input connector In of the control unit 12. The resistor R is connected to the high side switch HSS current mirror output to provide the mirror voltage $V_{MIRROR}$. The mirror voltage $V_{MIRROR}$ is supplied to a respective input connector of control unit 12. The anode An of the backlight driver BL is connected to several light sources LS1, LS2, ... LSn or to several chains CH1, CH2, ... CHn of light sources. Each of these is connected to a respective cathode input Cat1, Cat2, ... Catn of the backlight driver BL. The anode An is further connected to an input for the output voltage $V_{OUT}$ of the backlight driver BL. An overcurrent signal $I_{OVER}$ is output from the control unit 12 to the high side switch HSS in order to disconnect the backlight driver BL from power supply in case of an overcurrent. Thus, excessive electric current through the light sources LS which would cause the light sources LS to emit very high light intensity and thus lead to blinding of the user of head-up display unit 1 is prevented.

This allows for indirect measurement of backlight total output current $I_{OUT}$ by current measurement at the input of the backlight driver BL, considering ratio of input/output voltage, efficiency of the backlight driver BL together with the measured current. Due to the backlight driver's 12 boost architecture, a High Side Switch HSS is placed in the head-up display unit 1 at the input of the backlight circuit to protect from LED's short circuit flowing uncontrolled through a booster diode. The high side switch HSS contains a current mirror for diagnostics. Its output is advantageously used to measure the input current through the backlight driver BL. By applying the power conservation formula $\eta*P_{IN}= P_{OUT}$, in detail it is $\eta*V_{IN}*I_{IN}=V_{OUT}*I_{OUT}$. Based on this, the output current is: $I_{OUT}=(\eta*V_{IN}*I_{IN})/V_{OUT}$. Therein $\eta$ is the efficiency of the Backlight Driver BL that can be determined by calibration. $V_{IN}$ is the Backlight input voltage that can be measured by a simple voltage divider. $I_{IN}$ is the input current measured by the High Side Switch HSS current mirror. $V_{OUT}$ is the backlight driver BL output voltage that can be measured by a simple voltage divider.

In Fig.5, a simplified block diagram of the circuit is presented: HSS indicates the High Side Switch with integrated current mirror. BL indicates the backlight driver to be monitored with several, here: n, chains of light sources CHn, e.g. LED chains, connected to same anode An. Control unit 12 is for example implemented as microcontroller to perform computation on the input parameters. The calculation is performed advantageously according to: $I_{OUT}=((\eta*V_{IN}*K*V_{MIRROR})/R)/V_{OUT}$ where K is the Mirror amplification factor of the High Side Switch HSS, $I_{MIRROR}=I_{IN}/K$, R is the current injection resistor and $\eta$ is the efficiency of the Backlight Driver BL.

In a head-up display unit preferably a local dimming controller is connected directly to a backlight driver BL as it controls the backlight driver output request, and backlight driver's LEDs (the light sources) by itself. The indirect measurement according to the invention also applies into local dimming application and the blinding limit according to the invention is usually not influenced by a local dimming factor.

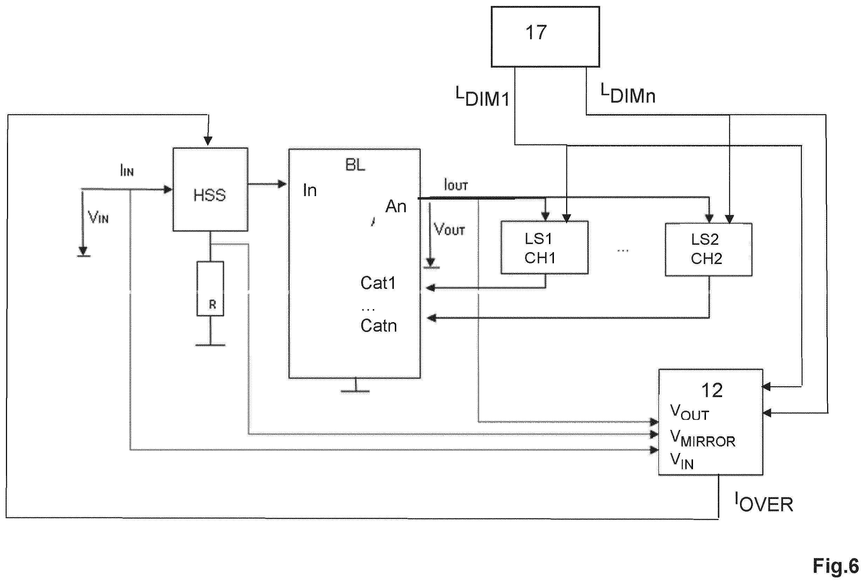

Fig. 6 shows circuitry of another head-up display unit 1 according to the invention. It is based on the previous drawing and adds a specific kind of local dimming driver 17. This local dimming driver 17 provides local dimming signals $L_{DIM1}$, $L_{DIM2}$, ... $L_{DIMn}$ to the respective light sources LS1, LS2, ..., LSn or to respective chains CH1, CH2, ..., CHn of light sources, respectively. This allows to reduce the backlight intensity in certain areas, while backlight intensity is kept constant at other areas. Reduced backlight intensity is applied to areas where either no information is to be displayed or less relevant information is to be displayed. This enhances the contrast of the virtual image VB as recognised by the user. It also saves energy and reduces thermal load.

According to the invention the local dimming signals $L_{DIM1}$, $L_{DIM2}$, ... $L_{DIMn}$ are also supplied to the control unit 12. The control unit takes into account that, depending on these signals, the output current $I_{OUT}$ is reduced by a certain dimming factor DIM. In order to detect overcurrent in a single one of the light sources LSn or in a single one of the chains CHn, the overcurrent threshold is to be reduced by the same dimming factor DIM. The dimming factor is for example calculated as follows:

$$DIM=(L_{DIM1}+L_{DIM2}+ \ldots +L_{DIMn})/n.$$

In other words, the present invention provides for blinding protection where light sources, especially LEDs, are driven by a Backlight Driver BL integrated circuit without ASIL functionality according to ISO26262. In such cases usually the backlight output current is measured by placing a series circuit with the output composed by a shunt resistor (e.g. a small ohmic resistance for reducing power dissipation) and an operational amplifier or dedicated precision measurement of low voltage drop on the shunt resistor. This causes high cost due to additional components required. Also, shunt resistors are usually expensive, an operational amplifier requires more additional components and dedicated current measurement ICs are very expensive. The invention provides for measuring the current through the light sources LSn, e.g. LEDs, driven by a non-ASIL backlight driver BL in order to ensure blinding protection of the driver without the need of costly components. The proposed solution is cost effective and, in addition, avoids the need of alteration of the backlight driver BL output circuitry.

An overcurrent protection circuit as known from US 2020/0251894 A1 can be used to fulfil the current limit feature instead of current monitoring as described in the current invention. However, since the solution according to the invention monitors the input current in the backlight driver, the current limit shall always be adjusted based on blinding limit and input voltage of the HUD, making implementation of a known overcurrent protection circuit quite hard especially in automotive industry where we need to support electrical pulses with rapid voltage change where microcontroller cannot respond that fast. The approach according to the invention with High Side Switch can be implemented much more easy because, according to the invention, the average values (filtered in hardware) of the voltage/current pair are used, and fast reaction of the microcontroller is not needed to achieve continuous monitoring. Current monitoring of the backlight driver output by reading out just the input voltage, input current and output voltage, is not known from prior art.

**Claims**

1. A head-up display unit (1), the head-up display unit (1) comprising:

    - a mirror (21,22);
    - a picture generating unit (10) for creating an image to be displayed as a virtual image (VB) to a viewer;
    - a backlight unit (13) with backlight driver (BL) for the picture generating unit (10); and
    - a control unit (12) for the backlight unit (13),

    **characterized by**

    the head-up display unit (1) further comprising a high side switch (HSS) with integrated current mirror providing a mirror voltage signal ($V_{MIRROR}$) to the control unit (12)
    the control unit (12) being provided to receive

        - an input voltage signal ($V_{IN}$) of the backlight driver (BL),
        - an input current signal ($I_{IN}, V_{MIRROR}$) of the backlight driver (BL), and
        - an output voltage signal ($V_{OUT}$) of the backlight driver (BL),

    the control unit (12) being further provided

        - to calculate an output current according to

$I_{OUT}=(\eta*V_{IN}*I_{IN})/V_{OUT}$ , wherein $\eta$ is the efficiency of the Backlight Driver (BL) and
        - to output an overcurrent signal ($I_{OVER}$) if the calculated output current ($I_{OUT}$) is an overcurrent which would cause the light sources (LS) to emit very high light intensity; and

    the high side switch (HSS) being provided

        - to receive the overcurrent signal ($I_{OVER}$), and
        - to disconnect the backlight driver (BL) from power supply in case the overcurrent signal ($I_{OVER}$) indicates an overcurrent.

2. The head-up display unit (1) according to claim 1, the backlight unit (13) further comprising a local dimming driver (17) providing local dimming signals ($L_{DIM}$) to light sources (LSn,CHn) of the backlight unit (13) and to the control unit (12).

**Patentansprüche**

1. Head-up-Anzeigeeinheit (1), wobei die Head-up-Anzeigeeinheit (1) umfasst:

    - einen Spiegel (21, 22);
    - eine Bilderzeugungseinheit (10) zum Erzeugen eines Bildes, das einem Betrachter als virtuelles Bild (VB) angezeigt wird;
    - eine Hintergrundbeleuchtungseinheit (13) mit einem Hintergrundbeleuchtungstreiber (BL) für die Bilderzeugungseinheit (10); und
    - eine Steuereinheit (12) für die Hintergrundbeleuchtungseinheit (13),

    **dadurch gekennzeichnet, dass**

    die Head-up-Anzeigeeinheit (1) ferner einen High-Side-Schalter (HSS) mit integriertem Stromspiegel umfasst, der ein Spiegelspannungssignal ($V_{MIRROR}$) an die Steuereinheit (12) bereitstellt
    wobei die Steuereinheit (12) eingerichtet ist zum Empfangen von

        - einem Eingangsspannungssignal ($V_{IN}$) des Hintergrundbeleuchtungstreibers (BL),
        - einem Eingangsstromsignal ($I_{IN}, V_{MIRROR}$) des Hintergrundbeleuchtungstreibers (BL) und
        - einem Ausgangsspannungssignal ($V_{OUT}$) des Hintergrundbeleuchtungstreibers (BL),

    wobei die Steuereinheit (12) ferner eingerichtet ist zum

- Berechnen eines Ausgangsstroms nach $I_{OUT}=(\eta*V_{IN}*I_{IN})/V_{OUT}$, wobei $\eta$ der Wirkungsgrad des Hintergrundbeleuchtungstreibers (BL) ist, und
- Ausgeben eines Überstromsignals ($I_{OVER}$), wenn der berechnete Ausgangsstrom ($I_{OUT}$) ein Überstrom ist, der die Lichtquellen (LS) veranlassen würde, eine sehr hohe Lichtintensität zu emittieren; und

wobei der High-Side-Schalter (HSS) eingerichtet ist zum

- Empfangen des Überstromsignals ($I_{OVER}$) und
- Trennen des Hintergrundbeleuchtungstreibers (BL) von der Stromversorgung, falls das Überstromsignal ($I_{OVER}$) einen Überstrom anzeigt.

**2.** Head-up-Anzeigeeinheit (1) nach Anspruch 1, wobei die Hintergrundbeleuchtungseinheit (13) ferner einen lokalen Dimm-Treiber (17) umfasst, der lokale Dimm-Signale ($L_{DIM}$) an Lichtquellen (LSn, CHn) der Hintergrundbeleuchtungseinheit (13) und an die Steuereinheit (12) bereitstellt.

## Revendications

**1.** Unité d'affichage tête haute (1), l'unité d'affichage tête haute (1) comprenant :

- un miroir (21, 22) ;
- une unité de génération d'images (10) pour créer une image à afficher en tant qu'image virtuelle (VB) à un spectateur ;
- une unité de rétroéclairage (13) avec pilote de rétroéclairage (BL) pour l'unité de génération d'images (10) ; et
- une unité de commande (12) pour l'unité de rétroéclairage (13),

**caractérisée en ce que**

l'unité d'affichage tête haute (1) comprend en outre un commutateur côté haute tension (HSS) avec miroir de courant intégré fournissant un signal de tension miroir ($V_{MIROIR}$) à l'unité de commande (12) l'unité de commande (12) est prévue pour recevoir

- un signal de tension d'entrée ($V_{ENTRÉE}$) du pilote de rétroéclairage (BL),
- un signal de courant d'entrée ($I_{ENTRÉE}$, $V_{MIROIR}$) du pilote de rétroéclairage (BL), et
- un signal de tension de sortie ($V_{SORTIE}$) du pilote de rétroéclairage (BL),

l'unité de commande (12) étant en outre prévue

- pour calculer un courant de sortie selon $I_{SORTIE} = (\eta*V_{ENTRÉE}*I_{ENTRÉE})/V_{SORTIE}$, dans laquelle $\eta$ représente l'efficacité du pilote de rétroéclairage (BL) et
- pour délivrer un signal de surintensité ($I_{SURINTENSITÉ}$) si le courant de sortie calculé ($I_{SORTIE}$) est une surintensité qui amènerait les sources lumineuses (LS) à émettre une très forte intensité lumineuse ; et

le commutateur côté haute tension (HSS) étant prévu

- pour recevoir le signal de surintensité ($I_{SURINTENSITÉ}$), et
- pour déconnecter le pilote de rétroéclairage (BL) de l'alimentation électrique au cas où le signal de surintensité ($I_{SURINTENSITÉ}$) indique une surintensité.

**2.** Unité d'affichage tête haute (1) selon la revendication 1, l'unité de rétroéclairage (13) comprenant en outre un pilote de gradation locale (17) fournissant des signaux de gradation locale ($L_{GRADATION}$) à des sources lumineuses (LSn, CHn) de l'unité de rétroéclairage (13) et à l'unité de commande (12).

FIG. 1

Fig. 2

Fig. 3

Fig.4

**Fig.5**

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200251894 A1

- US 2016363764 A1